(19) 

Europäisches
Patentamt
European
Patent Office
Office européen
des brevets

(11) **EP 4 265 742 A1**

(12) **EUROPEAN PATENT APPLICATION**
published in accordance with Art. 153(4) EPC

(43) Date of publication:
**25.10.2023 Bulletin 2023/43**

(21) Application number: **21924888.7**

(22) Date of filing: **27.12.2021**

(51) International Patent Classification (IPC):
**C21B 5/00** (2006.01)    **C21B 7/24** (2006.01)
**F27D 21/00** (2006.01)

(52) Cooperative Patent Classification (CPC):
**C21B 5/00; C21B 7/24; F27D 21/00**

(86) International application number:
**PCT/JP2021/048673**

(87) International publication number:
**WO 2022/168503 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.02.2021   JP 2021015650**

(71) Applicant: **JFE Steel Corporation
Tokyo 100-0011 (JP)**

(72) Inventors:
• **MATSUNAGA, Ryotaro
Tokyo 100-0011 (JP)**
• **ICHIKAWA, Kazuhira
Tokyo 100-0011 (JP)**
• **TAKAHASHI, Koichi
Tokyo 100-0011 (JP)**

(74) Representative: **Hoffmann Eitle
Patent- und Rechtsanwälte PartmbB
Arabellastraße 30
81925 München (DE)**

(54) **METHOD FOR DETECTING HEIGHT OF MOLTEN MATERIAL AND METHOD FOR OPERATING BLAST FURNACE**

(57) A molten-material-height detection method for a smelting furnace having a furnace body that includes a bosh part and having a plurality of tuyeres through which a hot blast is blown into a lower part of the furnace body, and, with the molten-material-height detection method, the height of a molten material that accumulates on a bottom part of the smelting furnace is detected by using the correspondence relationship between the rate of pressure drop increase in the bosh part relative to a tuyere front pressure and the height of a molten material.

FIG. 3

EP 4 265 742 A1

**Description**

Technical Field

The present invention relates to a molten-material-height detection method for detecting the height of a molten material on a bottom part of a smelting furnace and relates to a smelting-furnace operation method.

Background Art

A blast furnace is one kind of smelting furnaces having a tuyere through which gas is blown in. Such a blast furnace is a smelting furnace in which pig iron is made by charging ore with high iron content and coke from a furnace top and by blowing in mixed gas of, for example, air and pure oxygen from a furnace lower part. Pig iron and slag produced by the above-described method accumulates on a bottom part of the blast furnace and is discharged from a hole called a tapping hole in certain cycles. During the pig iron production with such an above-described blast furnace, the blast furnace is required to be operated in a stable manner without any trouble to achieve a planned production amount of pig iron.

However, for example, a malfunction of equipment for opening a tapping hole and reduction in the fluidity of the pig iron and slag in the blast furnace may cause an excessive accumulation of the pig iron and slag on the bottom part of the blast furnace. In such a case, gas permeability may be reduced, and a tuyere may be blocked by molten slag, and, in the worst case, production operations may be stopped. To avoid such troubles, it is preferable to determine the height of the molten material that accumulates on the bottom part of the smelting furnace during the operation of the smelting furnace.

There are techniques for measuring the height of the molten material that is accumulated on the bottom part of the smelting furnace. For example, Patent Literature 1 discloses a technique in which three rod-shaped electrodes are inserted in a furnace lower part, a voltage is applied to the electrodes, and the height of a molten material is determined by measuring the electric currents passing through the electrodes. In addition, Patent Literature 2 discloses a technique for measuring an in-furnace void fraction and the height of a molten material by a value obtained by dividing a difference between the air-blowing pressure in a furnace lower part and the pressure in a shaft lower part by a variation of a bosh gas volume. The techniques disclosed in Patent Literatures 1 and 2 are both for measuring the height of the molten material that is accumulated on the furnace bottom part of the smelting furnace.

Citation List

Patent Literatures

   Patent Literature 1: Japanese Unexamined Patent Application Publication No. 2011-158206
   Patent Literature 2: Japanese Unexamined Patent Application Publication No. 51-27809

Non Patent Literatures

   Non Patent Literature 1: Hatano Michiharu and two others, "Effect of Charging Methods, Furnace Design and Liquid Surface on Gas Flow in Blast Furnace", Tetsu-to-Hagané, Year 63 (1977), No. 2, P217-226
   Non Patent Literature 2: Iida Masakazu and two others, "Analysis of Drainage Rate Variation of Molten Iron and Slag from Blast Furnace during Tapping", Tetsu-to-Hagané, Vol. 95 (2009), No. 4, P331-339
   Non Patent Literature 3: Kashihara Yusuke and four others, "Effect of Unconsumed Mixed Small Coke on Permeability in Lower Part of Blast Furnace", Tetsu-to-Hagané, Vol. 102 (2016), No. 12, P661-668

Summary of Invention

Technical Problem

However, the measurement of the molten material height with the method disclosed in Patent Literature 1 requires the rod-shaped electrodes for generating a voltage in the furnace, a voltage generation device, an electric-current detection device for measuring an electric current generated by a voltage, and cables for connecting the electrodes and devices. Thus, the method disclosed in Patent Literature 1 has a problem of increase in the production cost of pig iron due to such addition of the equipment.

With the method disclosed in Patent Literature 2, the in-furnace void fraction and the height of the molten material are measured by the value obtained by dividing a difference between the air-blowing pressure in the furnace lower part and the pressure in the shaft lower part by a variation of the bosh gas volume. However, the air-blowing pressure in the furnace lower part and the pressure in the shaft lower part vary greatly depending on the grain diameters of the grains and the grain size distribution in the furnace. Moreover, the in-furnace void fraction, which is obtained by a difference between the air-blowing pressure in the furnace lower part and the pressure in the shaft lower part and the volume of change in the bosh gas volume, also varies greatly depending on the in-furnace pressure according to the grain diameters of the grains and the grain size distribution in the furnace.

As described above, although the air-blowing pressure in the furnace lower part, the pressure in the shaft lower part, and the in-furnace void fraction are influenced greatly by the grain diameters of the grains and the grain size in the furnace, such influences of the grain diameters of the grains in the furnace and the particle size are not considered in Patent Literature 2. Thus, the method disclosed in Patent Literature 2 has a problem that the height of the molten material that is accumulated on the bottom part of the smelting furnace is hardly be determined with accuracy. The present invention has been made in view of such problems of the related art, and an object thereof is to provide a molten-material-height detection method with which the height of a molten material can be determined with high accuracy while the production cost of pig iron is suppressed from increasing and to provide a smelting-furnace operation method using the detected height of the molten material.

Solution to Problem

Means for solving the above-described problems are described below.

(1) A molten-material-height detection method for a smelting furnace having a furnace body that includes a bosh part and having a plurality of tuyeres through which a hot blast is blown into a lower part of the furnace body, the molten-material-height detection method including: detecting the height of a molten material that accumulates on a bottom part of the smelting furnace, by using the correspondence relationship between the rate of pressure drop increase in the bosh part relative to a tuyere front pressure and the height of a molten material.

(2) A smelting-furnace operation method including:
performing, when the height of a molten material detected by using the molten-material-height detection method according to (1) exceeds a predetermined threshold, at least one of an operational action that reduces the production speed of the molten material and an operational action that increases the discharge speed of the molten material.

Advantageous Effects of Invention

The correspondence relationship between the rate of pressure drop increase in the bosh part relative to the tuyere front pressure and the height of the molten material remains constant regardless of the grain diameter of a raw material, a void fraction, and a bosh gas volume. Thus, with the molten-material-height detection method according to the present invention using the correspondence relationship, the height of the molten material can be detected with high accuracy while the production cost of pig iron is suppressed from increasing.

Brief Description of Drawings

[Fig. 1] Fig. 1 is a schematic sectional view of a blast furnace 10.
[Fig. 2] Fig. 2 is a graph illustrating the relationship between a molten material height and a pressure drop.
[Fig. 3] Fig. 3 is a graph illustrating the relationship between a rate of pressure drop increase and the molten material height.

Description of Embodiments

The present invention will be described through the description of embodiments thereof. In the embodiments, an embodiment of a molten-material-height detection method for a blast furnace serving as a smelting furnace will be described. However, the molten-material-height detection method according to the present invention is applicable not only to the blast furnace but also to any smelting furnace having plural tuyeres in a lower part of a furnace body and including a bosh part.

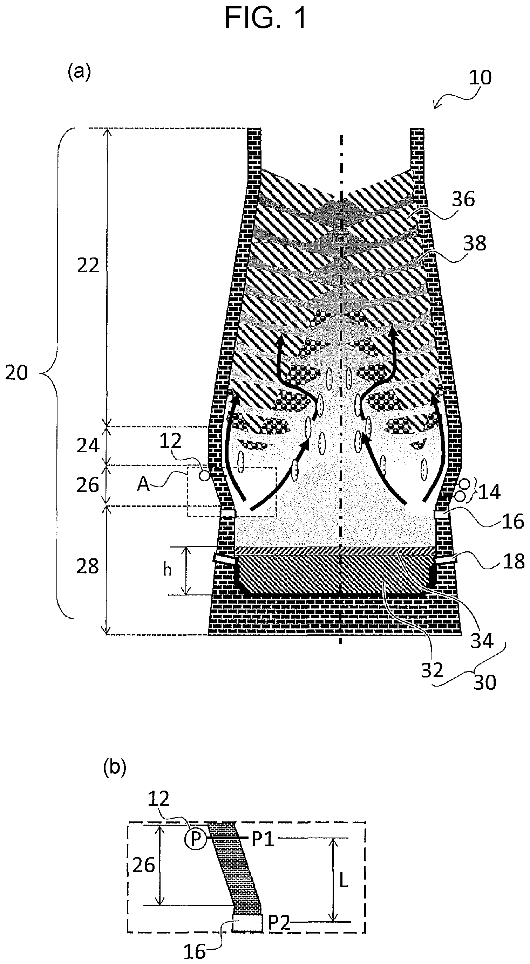

Fig. 1(a) is a schematic sectional view of the blast furnace 10. Fig. 1(b) is an enlarged view of part A in Fig. 1(a). The blast furnace 10 has a furnace main body 20, a pressure sensor 12, and plural temperature sensors 14. The furnace main body 20 is a bottomed tubular furnace body constituted by a shaft part 22, a belly part 24, a bosh part 26, and a hearth part 28. The pressure sensor 12 is disposed at the upper end of the bosh part 26. In addition, the plural temperature sensors 14 are arranged at different positions, in the height direction, of the bosh part 26.

In addition, the hearth part 28 has plural tuyeres 16 that are arranged in the circumferential direction of the blast furnace and through which a hot blast at high temperature is blown into the blast furnace. The number of the tuyeres 16 is, for example, 40. The hearth part 28 further has tapping holes 18 that are arranged in the circumferential direction of the blast furnace and through which pig iron 32 and molten slag 34 are tapped off. The number of the tapping holes 18 is, for example, four.

In such a blast furnace 10, ore and coke are charged alternately, in layers, from a top of the blast furnace 10 so as to form ore layers 36 and coke layers 38, a hot blast and a reducing material such as powdered coal are blown in through the tuyeres 16 formed in a lower part of the blast furnace, and the pig iron 32 is thus produced. The produced pig iron 32 and the molten slag 34 that has been produced as a by-product during the production of the pig iron 32 are accumulated on a furnace bottom part and are tapped off from the tapping holes 18 in predetermined cycles. In the present embodiment, the pig iron 32 and the molten slag 34 are collectively referred to as a molten material 30.

In such an operation of the blast furnace, when the molten material 30 to be accumulated on the furnace bottom part excessively accumulates thereon, there may arise problems such as reduction in gas permeability and blockage of the tuyeres 16 due to the molten slag 34. Thus, it is preferable to detect, with higher accuracy, the height (h in Fig. 1) of the molten material 30 that is accumulated on the furnace bottom part, to circumvent such problems.

When the height of the molten material 30 that is accumulated on the bottom part of the blast furnace 10 is increased, the capacity of a region from the liquid surface of the molten material 30 to the bosh part 26 is reduced, and there is thus a change in the pressure drop of the internal pressure of the bosh part relative to the tuyere front pressure immediately after hot blasts are blown in through the tuyeres 16. Thus, the relationship between the pressure drop and the height of the molten material 30 was checked to be determined.

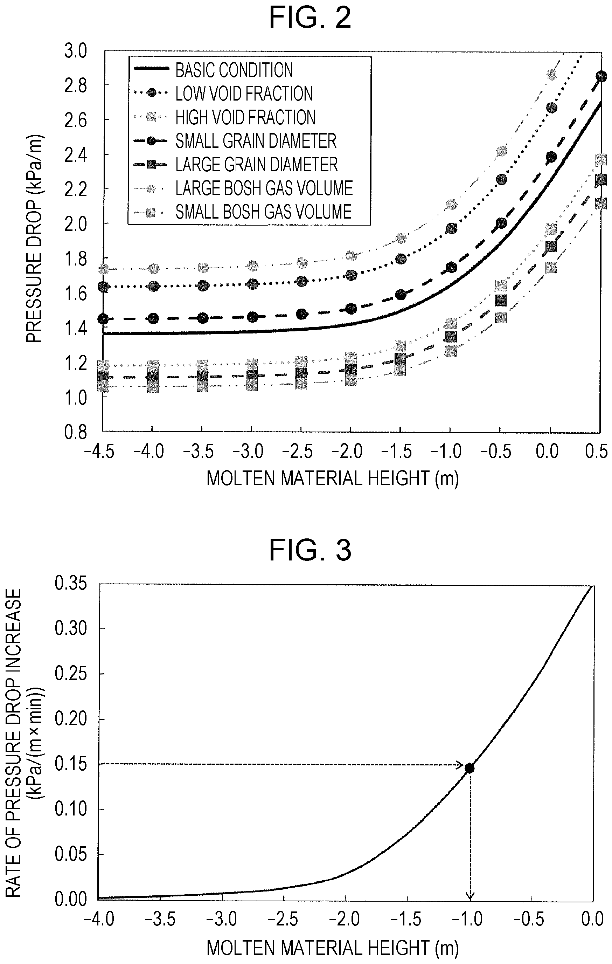

Fig. 2 is a graph illustrating the relationship between the molten material height and the pressure drop. In Fig. 2, the horizontal axis represents the molten material height (m), and the height is relative to the height of the tuyere 16 (0.0 m). The vertical axis represents the pressure drop (kPa/m), that is, the pressure drop of an internal pressure P1 at the upper end of the bosh part 26 relative to a tuyere front pressure P2. As Fig. 1(b) illustrates, when L is the height from the tuyere 16 to the pressure sensor 12, the pressure drop is calculated by (P2 - P1)/L.

The pressure drop and the molten material height were obtained by a simulation using a numerical model of two-dimensional gas flow in the lower part of the blast furnace. Specifically, the analysis of the gas flow in the lower part of the blast furnace and the analysis of the liquid surface shape of the molten material, both described in Non Patent Literature 1, were repeated until a predetermined convergence condition (a relative error between the liquid surface shape obtained by one analysis and the liquid surface shape obtained by the immediately preceding analysis is less than or equal to 0.001%) was satisfied, and the liquid surface shape of the molten material that satisfies the convergence condition and the pressure distribution of the lower part of the blast furnace were obtained. The pressure drop was calculated from the pressure distribution, and the molten material height was calculated from the liquid surface shape of the molten material.

The analysis of the gas flow in the lower part of the blast furnace was conducted by using Expressions (1) to (3) below described in Non Patent Literature 1. Expression (1) below is derived from the equation of motion of the gas in a packed bed of the blast furnace. Expression (2) below is derived from the equation of state of gas, and Expression (3) below is derived from the equation of state of gas.

[Expression 1]

$$\frac{1}{\rho_g} \times grad\, p = -1.75 \times \left(\frac{1-\varepsilon}{\varepsilon}\right) \times \frac{1}{d_r} \times |q| \times q - 150 \times \left(\frac{1-\varepsilon}{\varepsilon}\right)^2 \times \frac{v}{d_r^2} \times q \quad \cdots (1)$$

[Expression 2]

$$div\left(\rho_g \times \varepsilon \times r \times q\right) = 0 \quad \cdots (2)$$

[Expression 3]

$$p = K \times \rho_g \times T \quad \cdots (3)$$

When Expressions (1) to (3) above were solved, a stream function $\psi$ that satisfies Expression (2) was initially defined with cylindrical coordinates (r, z), and the distribution of the stream function $\psi$ was obtained by solving Expressions (1) and (3) above. A gas velocity vector and a gas pressure distribution in the furnace were then calculated from the distribution of the stream function $\psi$.

The analysis of the liquid surface shape of the molten material was conducted by using Expression (4) below that is also described in Non Patent Literature 1. Expression (4) below is derived from the liquid surface shape of the molten material and is given as a boundary condition for the analysis of the gas flow. Table 1 below gives calculation methods and measurement methods for the variables in Expressions (1) to (4) below.

[Expression 4]

$$p + \rho_l \times g \times h = const \quad \cdots (4)$$

[Table 1]

| Symbol | Name | Unit | Calculation/Measurement Method |
|---|---|---|---|
| $\rho_g$ | Gas density | kg/m$^3$ | Calculated by correcting bosh gas volume with average in-furnace temperature and average in-furnace pressure |
| gradp | Gas pressure gradient | kPa | Gas pressure distribution to be obtained |
| $\varepsilon$ | In-furnace void fraction | | Actual measured value of measurement-target blast furnace or literature value is used |
| $d_r$ | Grain diameter of coke in packed bed | m | Actual measured value of measurement-target blast furnace or literature value is used |
| q | Gas velocity vector | m/s | Value to be used when stream function $\psi$ is defined so as to satisfy Expression (2) above and value to be obtained |
| v | Gas kinematic viscosity | m2/s | Calculated by dividing, by viscosity, $\rho_g$, at average in-furnace temperature, calculated by Sutherland's formula expressed as Expression (5) below |
| r | r-direction distance | m | Distance from furnace center to point where gas pressure is obtained |
| K | Gas constant | m$^2$/(S$^2 \times$K)) | State equation constant 287 (m2/(S$^2 \times$K)) |
| T | In-furnace temperature | K | Average in-furnace temperature measured by temperature sensors |
| $\rho_l$ | Molten material density | kg/m$^3$ | Actual measured value of measurement-target blast furnace or literature value is used |
| 9 | Gravitational acceleration | M/S2 | 9.8 m/s$^2$ |
| h | Height of molten material from reference surface I | m | Molten-material liquid-surface shape to be obtained |

[Expression 5]

$$\mu_{(T)} = 1.746 \times 10^{-5} \times \frac{380.5}{T+107.5} \times \left(\frac{T}{273}\right)^{\frac{3}{2}} \quad \cdots (5)$$

In Expression (5) above, $\mu_{(T)}$ represents the viscosity (Pa-s) at the average in-furnace temperature. The bosh gas volume to be used for calculating the gas density can be calculated by Expression (6) below.
[Expression 6]

$$V_{bosh} = BV \times 1 \cdot 21 \cdots (6)$$

In Expression (6) above, $V_{bosh}$ represents the bosh gas volume (Nm³/min), and BV represents an air-blowing volume from the tuyeres 16 (Nm³/min).
The pressure value (P1) that is measured by the pressure sensor 12 may be used as the average in-furnace pressure. In addition, the average value of the temperatures that are measured by the plural temperature sensors 14 may be used as the average in-furnace temperature. The gas density $\rho_g$ after correction is calculated from these values and Expression (7) below.
[Expression 7]

$$\rho_g = \frac{V_{bosh}}{28} \times \frac{P}{101325} \times \frac{273}{T} \cdots (7)$$

In Expression (7) above, $\rho_g$ represents the gas density (kg/m³) after correction, $V_{bosh}$ represents the bosh gas volume (Nm³/min), P represents a pressure (Pa), T represents a temperature (K). The constants of the Expression (7) are given as follows: the numerical value 28 is the molecular weight of bosh gas ($N_2$:CO = 79:42); the numerical value 101325 is an atmospheric pressure (Pa) in a normal state; and the numerical value 273 is a temperature (K) in a normal state.
The in-furnace void fraction can be calculated, for example, by substituting the values of the blast furnace whose molten material height is to be detected, such as P1, P2, and L in Fig. 1(b) for the Ergun equation (flow equation of the gas that flows through voids in the packed bed). The void fraction value given in Non Patent Literature 2 may also be used. In addition, the molten material density (kg/m³) may be determined, for example, by measuring the density of the molten slag 34 that is tapped off from the tapping hole 18 and is then air-cooled. For the grain diameter of coke, an actual measured average grain diameter of the coke that is charged from the furnace top may be used, or a value obtained by correcting the actual measured value with the height of the blast furnace may be used as described in Non Patent Literature 3.
In addition, the analysis of the gas flow and the analysis of the liquid surface shape, both described above, were conducted while the grain diameter of a raw material, the void fraction, or the bosh gas volume was changed relative to a basic condition, and, in each of such various conditions, the relationship between the pressure drop and the height of the molten material 30 was obtained. Note that, in Fig. 2, the low void fraction means a condition in which the void fraction is lower than that of the basic condition, and the high void fraction means a condition in which the void fraction is higher than that of the basic condition. Similarly, the small grain diameter and the small bosh gas volume mean a condition in which the grain diameter is smaller than that of the basic condition and a condition in which the bosh gas volume is smaller than that of the basic condition, respectively. The large grain diameter and the large bosh gas volume mean a condition in which the grain diameter is larger than that of the basic condition and a condition in which the bosh gas volume is larger than that of the basic condition, respectively.
As given in Fig. 2, it has been confirmed that the pressure drop and the height of the molten material 30 have a definite correspondence relationship. Moreover, when being changed relative to the basic condition, the void fraction, the grain diameter, and the bosh gas volume had profiles translated upward or downward relative to the profile of the basic condition.
As described above, even when being changed, the void fraction, the grain diameter, and the bosh gas volume had the profiles translated in the up-down direction relative to the profile of the basic condition; thus, it is clear that the height of the molten material 30 can be detected without the influences of the void fraction, the grain diameter, and the bosh gas volume, when the height of the molten material 30 is detected by using the correspondence relationship between the gradient of a tangent at any point on the profiles, that is, the amount of pressure drop increase at any molten material height and the height of the molten material 30.
As described above, because the pressure drop is calculated by (P2 - P1)/L, when P2 - P1 is represented by ΔP, the amount of pressure drop increase at any molten material height can be expressed by Expression (8) below. Note that, in Expression (8), h represents the height of the molten material 30.
[Expression 8]

$$\frac{\partial}{\partial h}\left(\frac{\Delta P}{L}\right) \cdot \cdot \cdot (8)$$

On the other hand, when it is assumed that the height of the molten material 30 has a linear relationship with a time t and increases at a uniform rate, Expression (9) below holds. Note that a and b in Expression (9) are each any constant.
[Expression 9]

$$h = a \times t + b \cdot \cdot \cdot (9)$$

Both sides of Expression (9) above are rearranged, by being differentiated with the height h of the molten material 30, into Expression (10) below.
[Expression 10]

$$\frac{\partial t}{\partial h} = \frac{1}{a} \cdot \cdot \cdot (10)$$

With Expression (10) above, Expression (8) above can be transformed, for example, into Expression (11) below.
[Expression 11]

$$\frac{\partial}{\partial h}\left(\frac{\Delta P}{L}\right) = \frac{\partial}{\partial t}\frac{\partial t}{\partial h}\left(\frac{\Delta P}{L}\right) = \frac{1}{a} \times \frac{\partial}{\partial t}\left(\frac{\Delta P}{L}\right) \cdot \cdot \cdot (11)$$

Expression (11) above testifies that checking the amount of pressure drop increase at any molten material height is synonymous with checking the rate of pressure drop increase that is calculated by Expression (12) below. Note that, in Expression (12) below, ΔP is equal to P2 - P1.
[Expression 12]

$$\frac{1}{(t2-t1)} \times \left\{\left(\frac{\Delta P}{L}\right)_{t=t2} - \left(\frac{\Delta P}{L}\right)_{t=t1}\right\} = \frac{\partial}{\partial t}\left(\frac{\Delta P}{L}\right) \cdot \cdot \cdot (12)$$

Because checking the amount of pressure drop increase at any molten material height is synonymous with checking the rate of pressure drop increase that is calculated by Expression (12) above, as described above, it is clear that the molten material height can be detected without the influences of the void fraction, the grain diameter, and the bosh gas volume, even when the correspondence relationship between the rate of pressure drop increase and the molten material height is used instead of the amount of pressure drop increase at any molten material height given in Fig. 2.
Next, a calculation method of the rate of pressure drop increase will be described. The pressure value P1, which is measured by the pressure sensor 12 disposed at the upper end of the bosh part 26, is used as the internal pressure of the bosh part 26. The tuyere front pressure value P2 is used as the pressure at the front of the tuyere. The gas velocity vector and the gas pressure distribution in the furnace are calculated by the analysis of the gas flow in the lower part of the blast furnace conducted with Expressions (1) to (3) described above, and the tuyere front pressure value P2 is obtained from the gas pressure distribution.
The rate of pressure drop increase of the internal pressure of the bosh part 26 relative to the tuyere front pressure is then obtained by using, at times t1 and t2, the internal pressures P1 of the bosh part 26, the tuyere front pressures P2, the heights L from the tuyere 16 to the pressure sensor 12, and Expression (12) above.
Next, a way of obtaining the correspondence relationship between the rate of pressure drop increase and the molten material height will be described. Fig. 3 is a graph illustrating the relationship between the rate of pressure drop increase and the molten material height. The horizontal axis in Fig. 3 represents the molten material height (m) relative to the height of the tuyere (0.0 m). The vertical axis in Fig. 3 represents the rate of pressure drop increase (kPa/(m×min)).

The graph shown in Fig. 3 is made with operational parameters, in the case where the blast furnace having an inner capacity of 5000 m$^3$ is used, during a period when there is no operational trouble. The rate of rise of the molten material that accumulates on the bottom part of the blast furnace was calculated by dividing a pig iron production amount per unit time (iron tapping ratio: 2) by the effective bottom area of a hearth of the furnace. Here, the effective bottom area of the hearth of the furnace is a value obtained by multiplying the bottom area of the hearth of the furnace by the void fraction.

An initial position of the molten material height is set 4.0 m below the tuyere height, and the pressure drop was calculated every time when the molten material height rose 0.5 m. The rate of pressure drop increase was then calculated from the time required until the molten material height reached each of the heights from the position of -4.0 m and the value of the pressure drop at each time. Due to the calculation, the profile in Fig. 3 illustrating the correspondence relationship between the rate of pressure drop increase and the molten material height (m) can be obtained.

In the molten-height-detection method according to the present embodiment, the correspondence relationship between the rate of pressure drop increase and the molten material height in Fig. 3 is determined in advance. Then, when the molten material height is detected, the internal pressure of the bosh part and the tuyere front pressure at each of the times t1 and t2 are obtained, the rate of pressure drop increase is obtained from these values, L, and Expression (12) above, and, by using the rate of the increase and the correspondence relationship above, the height of the molten material that accumulates on the bottom part of the blast furnace is detected. In the example in Fig. 3, when the rate of pressure drop increase is calculated as 0.15 (kPa/(m×min)), it is detected that the molten material is accumulated up to a level of -1.0 m from the tuyere height.

As described above, the correspondence relationship between the rate of pressure drop increase and the molten material height is not affected by the void fraction, the grain diameter, and the bosh gas volume. Thus, the molten-material-height detection method of the present embodiment for detecting the molten material height by using the correspondence relationship between the rate of pressure drop increase and the molten material height may be regarded as a method that enables detection of the height of the molten material that accumulates on the furnace bottom part with higher accuracy than methods of the related art. Moreover, because the molten material height can be detected without equipment such as an electrode, the molten-material-height detection method of the present embodiment may be regarded as a method that enables detection of the molten material height with high accuracy while enabling suppression of increase in pig iron production cost.

In addition, when the molten material height detected by using the molten-material-height detection method described above exceeds a preset threshold, an operational action that reduces the production speed of the molten material is preferably performed. Due to such an action, it is possible to avoid an excessive accumulation of the molten material on the bottom part of the blast furnace and to avoid troubles such as reduction in gas permeability and tuyere blockage due to the molten slag. Such an action that reduces the production speed of the molten material is, for example, reducing the air-blowing volume from the tuyeres 16. Instead of or with the operational action that reduces the production speed of the molten material, an operational action that increases the discharge speed of the molten material may be performed. Due to such an action, it is possible to avoid an excessive accumulation of the molten material on the bottom part of the blast furnace and to avoid troubles such as reduction in gas permeability and tuyere blockage due to the molten slag.

Although the example in which the pressure sensor 12 is disposed at the upper end of the bosh part 26 is given in the present embodiment, this is not the only option. The pressure sensor 12 may be disposed not only at the upper end of the bosh part 26 but also at any position within the range of the bosh part 26.

Reference Signs List

10   blast furnace
12   pressure sensor
14   temperature sensor
16   tuyere
18   tapping hole
20   furnace main body
22   shaft part
24   belly part
26   bosh part
28   hearth part
30   molten material
32   pig iron

34    molten slag
36    ore layer
38    coke layer

**Claims**

1.  A molten-material-height detection method for a smelting furnace having a furnace body that includes a bosh part and having a plurality of tuyeres through which a hot blast is blown into a lower part of the furnace body, the molten-material-height detection method comprising:

    detecting a height of a molten material that accumulates on a bottom part of the smelting furnace, by using a correspondence relationship between a rate of pressure drop increase in the bosh part relative to a tuyere front pressure and a height of a molten material.

2.  A smelting-furnace operation method comprising:

    performing, when a height of a molten material detected by using the molten-material-height detection method according to Claim 1 exceeds a predetermined threshold,
    at least one of an operational action that reduces a production speed of the molten material and an operational action that increases a discharge speed of the molten material.

# FIG. 1

(a)

(b)

## FIG. 2

## FIG. 3

## INTERNATIONAL SEARCH REPORT

| International application No. |
| --- |
| **PCT/JP2021/048673** |

**A.    CLASSIFICATION OF SUBJECT MATTER**

*C21B 5/00*(2006.01)i; *C21B 7/24*(2006.01)i; *F27D 21/00*(2006.01)i
FI:    C21B7/24; C21B5/00 323; F27D21/00 N

According to International Patent Classification (IPC) or to both national classification and IPC

**B.    FIELDS SEARCHED**

Minimum documentation searched (classification system followed by classification symbols)

C21B5/00; C21B7/24; F27D21/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2017-160498 A (KOBE STEEL LTD) 14 September 2017 (2017-09-14) entire text | 1, 2 |
| A | JP 2010-138437 A (JFE STEEL CORP) 24 June 2010 (2010-06-24) entire text | 1, 2 |
| A | JP 49-83476 A (NIPPON STEEL CORPORATION) 10 August 1974 (1974-08-10) entire text | 1, 2 |

☐ Further documents are listed in the continuation of Box C.    ☑ See patent family annex.

\*    Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
| --- | --- |
| **03 February 2022** | **15 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2021/048673**

| Patent document cited in search report | | | Publication date (day/month/year) | Patent family member(s) | Publication date (day/month/year) |
|---|---|---|---|---|---|
| JP | 2017-160498 | A | 14 September 2017 | (Family: none) | |
| JP | 2010-138437 | A | 24 June 2010 | (Family: none) | |
| JP | 49-83476 | A | 10 August 1974 | (Family: none) | |

Form PCT/ISA/210 (patent family annex) (January 2015)

## REFERENCES CITED IN THE DESCRIPTION

**Patent documents cited in the description**

- JP 2011158206 A

- JP 51027809 A

**Non-patent literature cited in the description**

- **HATANO MICHIHARU.** Effect of Charging Methods, Furnace Design and Liquid Surface on Gas Flow in Blast Furnace. *Tetsu-to-Hagané,* 1977, (2), 217-226
- **IIDA MASAKAZU.** Analysis of Drainage Rate Variation of Molten Iron and Slag from Blast Furnace during Tapping. *Tetsu-to-Hagané,* 2009, vol. 95 (4), 331-339

- **KASHIHARA YUSUKE.** Effect of Unconsumed Mixed Small Coke on Permeability in Lower Part of Blast Furnace. *Tetsu-to-Hagané,* 2016, vol. 102 (12), 661-668